# EUROPÄISCHE PATENTSCHRIFT

(11) **EP 1 860 795 B1**
(45) Veröffentlichungstag und Bekanntmachung des Hinweises auf die Patenterteilung: **24.02.2010**
(21) Anmeldenummer: 07009365.3
(22) Anmeldetag: 10.05.2007
(51) Int. Cl.: H04B 7/185

(54) **Verfahren zur dynamischen Ressourcenzuteilung in einem interaktiven Satellitenfunknetz-Multimediasystem und Verwendung des Verfahrens**
Method for dynamic resource allocation in an interactive satellite mobile wireless multimedia system and application of the method
Procédé destiné à la distribution de ressources dynamiques dans un système multimédia interactif en réseau radio satellite et utilisation du procédé

(30) Priorität: 26.05.2006 DE 102006025038
(43) Veröffentlichungstag der Anmeldung: 28.11.2007
(73) Patentinhaber: Deutsches Zentrum für Luft- und Raumfahrt e.V., 51147 Köln (DE)
(72) Erfinder: Kißling, Christian, 81549 München (DE)
(74) Vertreter: von Kreisler Selting Werner

(56) Entgegenhaltungen:
- FR-A- 2 874 147
- US-A1- 2002 183 066
- US-A1- 2005 002 375
- FANEBUST H ET AL: "Interactive IP-Network Via Satellite DVB-RCS" April 2004 (2004-04), IEEE JOURNAL ON SELECTED AREAS IN COMMUNICATIONS, IEEE SERVICE CENTER, PISCATAWAY, US, PAGE(S) 508-517 , XP011110201 ISSN: 0733-8716 * Absatz [00IV]; Abbildung 5 *
- "Digital Video Broadcasting (DVB); Interaction channel for satellite distribution systems European Broadcasting Union Union Européenne de Radio-Télévision EBU[Pts]UER; ETSI EN 301 790" September 2005 (2005-09), ETSI STANDARDS, EUROPEAN TELECOMMUNICATIONS STANDARDS INSTITUTE, SOPHIA-ANTIPO, FR , XP014032161 ISSN: 0000-0001 * Absatz [6.6.1.1] * * Absätze [06.7] - [06.8] *

## Beschreibung

Die Erfindung betrifft ein Verfahren zur dynamischen Ressourcenzuteilung in einem interaktiven Satellitenfunknetz-Multimediasystem mit Zuweisung von Zeitschlitzen im mit Multi-Frequency Time Division Multiple Access-Technik, abgekürzt MF-TDMA, arbeitenden Rückwärtskanal mittels eines dynamischen Ressourcenzuteilungsmanagers, der alle eintreffenden Anforderungen, die von Entitäten ausgesendet werden, die eine Übertragung von Daten über das Satellitenfunknetz zu anderen Entitäten oder einer zentralen Überleiteinrichtung wünschen, zur Zuteilung von Bandbreite unter Berücksichtigung von Eigenschaften und Forderungen beinhaltenden Informationen verwaltet und einen den Informationen gehorchenden Burst-Zeitplan berechnet.

Das durch die vorliegende Erfindung angesprochene Problem ergibt sich aus dem folgenden Zusammenhang: Wenn Daten im Rückwärtskanal einer Satellitenfunkverbindung übertragen werden, müssen die verfügbaren Ressourcen verwaltet, verteilt und deren Ausnutzung optimiert werden. Während dies erfolgt, müssen mehrere Randbedingungen erfüllt werden, wie z.B. die Erlangung von QoS(Quality of Service)-Kriterien (Verzögerung, Verzögerungsjitter, Fallenlassen usw.), Neutralität bei der Bandbreitenverteilung und Kanalbedingungen des Übertragungskanals. Die Anwendung von ACM (Adaptive Coding and Modulation) als Schwundminderungstechnik (Fade Mitigation Technique; FMT) erlaubt das Maximieren der Verwendung der verfügbaren Bandbreite durch Wählen einer Kombination von Codierrate und Modulationsniveau, wodurch die Bitfehlerrate für das tatsächliche Signal/Rausch-Verhältnis (SNIR; Signal to Noise Interference Ratio) im Übertragungskanal optimiert wird.

"Adaptive Coding and Modulation" (ACM) ist eine Methode der Datenübertragung, bei welcher der Empfänger eine Rückmeldung über die Qualität der empfangenen Daten und damit über die Übertragungskanalbedingungen gibt und darüber die anzuwendende Datencodierung und Datenmodulation des Datenübertragungskanals anpasst.

Da sowohl die durch eine Gruppe von Endgeräten angeforderte Kapazitätsmenge, abhängig von der tatsächlichen Verkehrslast, als auch ihre Kanalzustände über die Zeit variieren, ist es notwendig, die verfügbare Bandbreite unter allen Endgeräten neu zu verteilen, wobei der Kanaleinfluss, beispielsweise infolge von Regenschwund oder klarem Himmel, im Hinblick auf die angewandte Modulation und Codierung berücksichtigt wird.

Den Anstoß zu dem der Erfindung zu Grunde liegenden Verfahren ergab sich aus dem Gedanken, eine Verbesserung der Ressourcenzuteilung von DVB-RCS (Digital Video Broadcasting-Return Channel via Satellite) zu entwickeln, wobei die erwähnten neuen Methoden der Schwundminderungstechnik verwendet werden sollten.

Wie aus dem Artikel von J. Park, U. Savagaonkar, E. Chong, H. Siegel, S. Jones: "Allocation of QoS connection in MF-TDMA. Satellite Systems: A Two-Phase Approach", IEEE Transactions on Vehicular Technology, Vol. 54, No. 1, Januar 2005, hervorgeht, benutzen derzeit die für eine Ressourcenzuteilung verwendeten Verfahren Online-Algorithmen zur Ermittlung der Zuweisung von Endgeräten an die Träger. Jede Anforderung, sogar wenn sie vom gleichen Endgerät ist, wird getrennt behandelt und durch Anwendung eines Algorithmus zugewiesen, der im vorstehend angegebenen Artikel als Reserve Channel with Priority (RCP)-fit bezeichnet wird.

Die dieses bekannte Verfahren verwendenden Systeme berücksichtigen nur das Szenario, bei dem Superframes aus Zeitschlitzen bestehen, die alle die gleiche Länge haben, und ohne Berücksichtigung verschiedener Trägersymbolraten. Da der Algorithmus ein Online-Algorithmus ist, werden alle eintreffenden Anforderungen zur Ankunftszeit bearbeitet. Diese Systeme schließen sowohl die Möglichkeit von Träger-Hopping als auch die Möglichkeit der Parallelübertragung aus.

Darüber hinaus behandeln diese Systeme nicht die Situation der Überlastung und Konfliktauflösung. Wie dem vorgenannten Artikel zu entnehmen ist, arbeitet der RCP-Algorithmus grundsätzlich folgendermaßen:

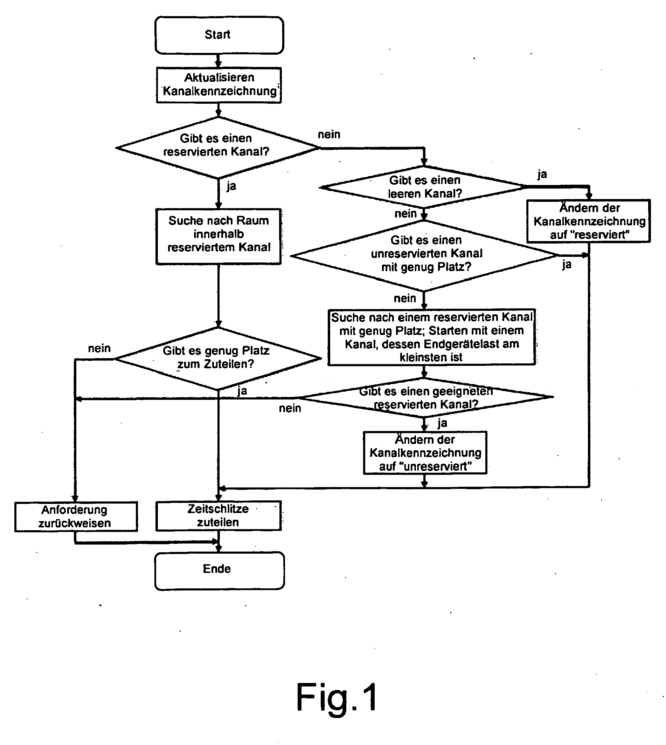

Dieser Algorithmus ist zur Ausführung von Reservierungen für Träger ausgelegt und ist in Flussdiagrammform in Fig.1 schematisch dargestellt. Ist einmal eine Anforderung einem Träger zugewiesen worden, dann ist der ganze Träger für Zuweisungen reserviert, die zum gleichen Endgerät gehören. Wenn kein leerer Träger verfügbar ist, wird nach einem sogenannten unreservierten Kanal gesucht. Dies ist im wesentlichen ein Träger, der vorher reserviert war, aber in den Unreserviert-Zustand gelangte und somit für verschiedene Endgeräte offen ist. Wenn solch ein unreservierter Träger verfügbar ist und genug Platz hat, wird hier die Anforderung zugewiesen. Sonst wird nach einem reservierten Kanal gesucht, der genug Platz hat, wobei mit einem Träger begonnen wird, der die geringste Last hat. Wenn ein solcher reservierter Träger besteht, gilt er als unreserviert und die Anforderung wird zugewiesen.

Aus EP 1 429 473 A1 ist ein dynamisches Ressourcenzuteilungsverfahren bekannt, bei dem Zeitschlitze in einem Rückkanal in MF-TDMA(Multi-Frequency Time Division Multiple Access)-Betriebsweise zugewiesen werden, um einen maximalen Datendurchsatz zu erreichen. Hierzu wird zunächst eine Anforderungsmenge an Ressource entsprechend jedem der Endgeräte während einer Superframe-Periode angesammelt. Die angesammelte Anforderungsmenge an Ressource wird dann in im Superframe enthaltene Rahmenpaare geteilt und eine Ergebnissumme aus der Teilung und Abrundung des Restes der Teilung auf die nächste ganze Zahl als Ressourcenanforderungsmenge festgehalten. Schließlich wird eine optimale Zuteilungsmenge auf der Grundlage der festgehaltenen Ressourcenanforderungsmenge beschlossen und ein Zeitschlitz bestimmt, der jedem der Endgeräte auf der Grundlage der optimalen Zuteilungsmenge zugewiesen werden soll.

Die Voraussetzung von Zeitschlitzen gleicher Länge sowie das Fehlen der Berücksichtigung von Superframes, die Träger mit verschiedenen Symbolraten enthalten, schafft bei den bekannten Verfahren einen Mangel im effizienten Gebrauch der verfügbaren Übertragungsbandbreite. Da die Anwendung eines dynamischen Ressourcenzuteilungsschemas in einem realen Szenario RCSTs (Return Channel Satellite Terminals) mit verschiedenen maximalen Übertragungssymbolraten einschließt, ist es erforderlich zu berücksichtigen, dass Träger auch verschiedene Symbolraten haben können, auch um zu vermeiden, auf eine konstante Zeitschlitzlänge begrenzt zu werden, da dies Flexibilität wegnimmt.

Die Anwendung eines Online-Algorithmus verringert auch die mögliche Leistungsfähigkeit des Systems, da die Zuweisungsentscheidungen nicht auf der vollen Kenntnis der Anforderungssituation beruhen, sondern schrittweise erfolgen. Aus diesem Grund kann die Situation entstehen, dass eine der schrittweisen Entscheidungen zu einer Zuweisung führt, die suboptimal ist, dies aber nur am Ende der Zuweisungsrunde erkannt wird und nicht korrigiert werden kann. Die Verwendung der Bandbreite ist in diesen Fällen suboptimal. Im Fall, dass die verfügbare Bandbreite nicht ausreichend ist, um alle Anforderungen zu bedienen, besteht die verfolgte Strategie darin, die Anforderung fallen zu lassen. Dieser Vorgang stellt auch einen Verlust verfügbarer Bandbreite dar und kann Probleme mit der Einhaltung der QoS-Kriterien ergeben, da Datenpakete fallengelassen, d.h. ausgeworfen werden. Ein intelligenter Konfliktentscheidungsmechanismus könnte die Gesamtnutzung der Bandbreite sowie die erreichte Neutralität und Einhaltung der QoS-Kriterien optimieren.

Aus US 7 016 375 B1 ist ebenfalls ein für MF-TDMA verwendbares Verfahren zur dynamischen Ressourcenzuteilung bekannt. Hier sind zum Zuteilen der Ressourcen eines gemeinsamen Uplink-Mediums eines asynchronen Vielfachzugriffnetzes eine integrierte Verbindungszugangssteuerung und Bandbreitenanforderungssteuerung vorgesehen, wobei die Verbindungszugangssteuerung allen virtuellen Verbindungen oder Verbindungsgruppen statische Ressourcen zuteilt und darüber hinaus dynamische Ressourcen bucht, falls virtuelle Verbindungen oder Verbindungsgruppen garantierte dynamische Ressourcen verlangen. Die Bandbreitenanforderungssteuerung teilt den dynamische Ressourcen anfordernden virtuellen Verbindungen bzw. Verbindungsgruppen dynamische Ressourcen in einer solchen Weise zu, dass den dynamische Ressourcen anfordernden virtuellen Verbindungen bzw. Verbindungsgruppen dynamische Ressourcen dynamisch bis zu wenigstens jenem garantierten dynamischen Ressourcenanteil zugewiesen werden, der durch die integrierte Verbindungszugangssteuerung für sie gebucht und in einer Zuteilungstabelle festgelegt worden ist.

Aus US 2005/002375 A1 ist ein für Satellitenfunknetze einsetzbares System mit einer Ressourcen-Verwaltungsarchitektur bekannt, welche die Erfordernisse zur Unterstützung hierarchischer Dienstklassenvereinbarungen bei Einhaltung von QoS-Verpflichtungen in MF-TDMA-Funkumgebungen erfüllt. Diese Architektur weist die Fähigkeit auf, Ressourcen einem Endgerätenutzer zuzuteilen, wobei Endnutzer-Anforderungen, wie z.B. eine Vielzahl von Dienstverkehrsklassen, Verkehrs-QoS, Dienstebenen-Verpflichtungen, Nutzerendgeräte-Position innerhalb des Abdeckungsbereiches und dynamische Änderung der Ausbreitungsbedingungen, erfüllt werden. Dieses System arbeitet mit einer Ressourcen-Verwaltungsarchitektur, die es einem einzelnen Nutzerendgerät ermöglicht, Bursts mit verschiedenen Modulationsarten, Symbolraten und Codierraten innerhalb eines einzelnen TDMA-Rahmens zu übertragen.

Aus FR 2 874 147 A1 ist ein Verfahren zum Zuteilen von durch mehrere Nutzer gemeinsam genutzten Ressourcen eines mit MF-TDMA-Technik arbeitenden Satellitenfunk-Kommunikationsnetzes durch Zuweisung von Zeitschlitzen eines dynamisch anpassbaren Zeit/Frequenz-Plans bekannt. Dazu ist in einer Kommunikationsverwaltung eine Einrichtung zur Ressourcenzuteilung für den Rückwärtskanal vorgesehen, die Verarbeitungsmittel zum Bestimmen eines Satzes von Zeit/Frequenz-Plänen in Abhängigkeit von wenigstens einem für eine Nutzerendgerätemenge erforderlichen Symbolratenleistungsumfang und von einer Bestellung einer ausgewählten Menge von Rahmen umfasst, von denen jeder durch einen ausgewählten Satz von gleichartigen Zeitschlitzen im Hinblick auf ihre Übertragung zu jedem der Nutzerendgeräte bestimmt ist. Jedes Mal wenn ein Nutzerendgerät wenigstens einen Leistungsumfang anfordert, bestimmt die Einrichtung zur Ressourcenzuteilung eine Symbolrate unter Berücksichtigung dieses angeforderten Leistungsumfangs und einen entsprechenden, zum Bestimmungszeitpunkt optimalen Zeitschlitz aus den bestimmten Zeit/Frequenz-Plänen, um die Zuteilung der gemeinsam genutzten Ressourcen des Netzes zu optimieren. Die Ressourcenzuteilung erfolgt hier also mittels eines dynamischen Ressourcenzuteilungsmanagers, der alle eintreffenden Anforderungen zur Zuteilung von Bandbreite unter Berücksichtigung von Eigenschaften und Forderungen beinhaltenden Informationen verwaltet und einen den Informationen gehorchenden Burst-Zeitplan berechnet.

In US 2002/183066 A1 wird ein Verfahren zur Planung von Übertragungen in einem Kommunikationssystem behandelt, wobei bei der Planung eine Zuteilungsprioritätsfunktion unter Benutzung von Kanalbedingung und Gleichberechtigungskriterien vorhanden ist und somit die Planung so ausgelegt ist, dass sie eine Vielzahl Kombinationen von Kanalzustandsmessgrößen und Nutzergleichberechtigungsmessgrößen anwenden kann.

Aus dem Artikel H. Fanebust et al.: "Interactive IP-Network Via Satellite DVB-RCS", April 2004 (2004-04), IEEE Journal on Selected Areas in Communications, IEEE Service Center, Piscataway, US, Vol. 22, No. 3, Seiten 508-517, XP011110201 ISSN: 0733-8716 ist ein interaktives Breitband-Satelliten-Multimediasystem für DVB-RCS mit Funk-Ressourcen-Management bekannt, das den beteiligten Endgeräten Funkressourcen entsprechend deren Nutzerprofil und entsprechend den Satellitenressourcen zuteilt. Die DVB-RCS-Spezifikation beschreibt die Verwendung von Superframes, Frames und Zeitschlitzen in einem MF-TDMA-Rückwärtskanal. Das Funk-Ressourcen-Management teilt Kapazität im Rückwärtskanal entsprechend den von den Endgeräten kommenden Anforderungen und entsprechend der zwischen dem Nutzer und dem Operator bestehenden Dienstebenen-Vereinbarung aus. Fordert daher ein Endgerät Kapazität an, so prüft das Funk-Ressourcen-Management in einer Datenbank das dort gespeicherte Nutzerprofil.

Aus "Digital Video Broadcasting (DVB); Interaction channel for satellite distribution systems, European Broadcasting Union, Union Européenne de Radio Television, EBU[Pts]UER; ETSI EN 301 790", September 2005, ETSI Standards, European Telecommunications Standards Institute, Sophia-Antipolis, FR, XP014032161, ISSN: 0000-0001 ist es im Zusammenhang mit der weitergeführten Spezifikation zum Digital Video Broadcasting (DVB) für den Rückwärtskanal RCS bekannt, eine dynamische Ressourcenzuteilung vorzunehmen. Es können danach Zeitschlitze innerhalb eines Superframes im mit MF-TDMA arbeitenden Rückwärtskanal nach den Anforderungen von Endgeräten und damit Bandbreitenressourcen mittels eines dynamischen Ressourcenzuteilungsmanagers dynamisch zugeteilt werden.

Aufgabe der vorliegenden Erfindung ist es, ein Verfahren zur dynamischen Ressourcenzuteilung in einem interaktiven Satellitenfunknetz-Multimediasystem zu schaffen, das für die Übertragung im Rückwärtskanal die Verteilung von Bandbreite unter verschiedenen Endgeräten mit Berücksichtigung von ACM (Adaptive Coding and Modulation) als eine Schwundminderungstechnik, die Erlangung von Grenzen für QoS (Quality of Service) und eine Optimierung von geliefertem Durchsatz und Neutralität verwaltet. Im Falle, dass die angeforderte Kapazität die verfügbare Kapazität übersteigt, soll darüber hinaus ein Zuteilungsschema angeboten werden, das diesen Konflikt in einer Weise löst, welche sowohl die Durchsatzeffizienz als auch die QoS-Bedürfnisse und die Neutralität der Bandbreitenverteilung berücksichtigt.

Gemäß der Erfindung, die sich auf ein Verfahren zur dynamischen Ressourcenzuteilung der eingangs genannten Art bezieht, wird diese Aufgabe dadurch gelöst, dass der dynamische Ressourcenzuteilungsmanager bei der Berechnung des Burst-Zeitplanes die Randbedingung berücksichtigt, wonach zur Vermeidung einer Parallelübertragung nur ein Zeitschlitz zur gleichen Zeit in einem der verschiedenen Träger zugewiesen werden darf und folglich die anderen Träger in der gleichen Zeit keine Zeitschlitzzuweisung aufweisen dürfen, dass ein dynamisches Abbilden (Mapping) von Modulations- und Codierratensätzen, sogenannten ModCods, in die Zeitschlitze jeweils eines Superframes mittels einer Architektur vorgenommen wird, die einer sukzessiven Berechnungsstrategie folgt, wobei abhängig von der Last der Anforderungen dahingehend entschieden wird, ob ein Anforderungskonflikt-Auflösungsalgorithmus anzuwenden ist oder ob eine direkte Zuteilung erfolgt, dass in einer Überlastungssituation, bei der Entitäten mehr Kapazität als verfügbar anfordern, eine Konfliktauflösungsstrategie befolgt wird, die darin besteht, dass ratenbasierten Anforderungen (RBDC; Rate Based Dynamic Capacity) vor volumenbasierten Anforderungen (VBDC; Volume Based Dynamic Capacity) Priorität für die Zuteilung gegeben wird und in Abhängigkeit von der Zusammensetzung der Anforderungen ein Konfliktauflösungsalgorithmus in derjenigen Anforderungskategorie, ratenbasiert oder volumenbasiert, angewandt wird, die nicht zugewiesen werden kann, so dass der Konfliktauflösungsalgorithmus die Größe aller Anforderungen in derjenigen Anforderungskategorie bis zu einer Ebene reduziert, bei der alle Entitäten ihre maximal verfügbare Kapazität bekommen, jedoch unter Berücksichtigung von QoS-Kriterien, dass zum Optimieren der Belegung eines Superframes ein Bin-Packing-Algorithmus angewandt wird, der entscheidet, welchen Anforderungen Kapazität in welchem Träger zugewiesen werden soll, wobei dieser Bin-Packing-Algorithmus die Zuweisung freier Kapazitäten (FCA; Free Capacity Assignment) optimiert, und dass schließlich der Übertragungsburst-Zeitplan an alle Entitäten übertragen wird.

Der Gesamtprozess der Zuteilung und Verteilung von Ressourcen wird vorteilhaft in einer zentralen Überleiteinrichtung (Gateway) ausgeführt.

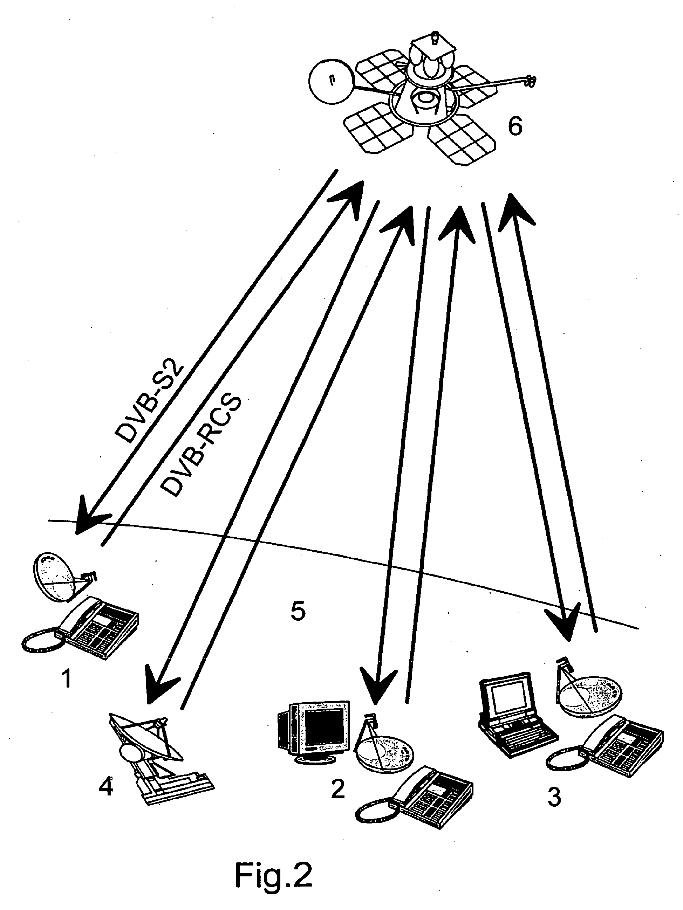

Das System kann einen transparenten oder regenerativen Satelliten enthalten. Infolge der Verfügbarkeit eines Vorwärtskanals (DVB-S2) und eines Rückwärtskanals (DVB-RCS) kann eine Vielzahl verschiedener Dienste, wie z.B. Voice over IP (VoIP), Videostreaming, Audiostreaming, Internet-Verkehr, File Transfer Protocol (FTP), E-Mail usw. geliefert werden. Fig.2 zeigt schematisch ein solches Gesamtsystem mit mehreren jeweils mit einer Parabolantenne ausgerüsteten Endgeräten 1, 2, 3 und einer mit einer Bodenstationsantenne ausgestatteten Überleiteinrichtung (Gateway) 4 am Erdboden 5 sowie einem Kommunikationssatelliten 6.

Da alle diese Dienste verschiedene Forderungen hinsichtlich Quality of Service (QoS), z.B. Verzögerung und Verzögerungsjitter für VoIP und Streaming, haben, muss eine zentrale Entität die verfügbaren Ressourcen im DVB-S2-Vorwärtskanal sowie im DVB-RCS-Rückwärtskanal kontrollieren und verteilen. Der durch die vorliegende Erfindung vorgeschlagene Gedanke spricht die Ressourcenmanagement-Angelegenheiten für den MF-TDMA-Rückwärtskanal an.

Bei der Anwendung von ACM (Adaptive Coding and Modulation) variiert der Bandbreitenbedarf sogar für eine Anforderung einer konstanten Bitrate in Abhängigkeit vom Kanalzustand. Beispielsweise steigt der Bandbreitenbedarf an, wenn sich der Kanalzustand von einer Bedingung bei klarem Himmel zu einem Kanal mit Regenschwund ändert, da die angewandte Codierung hierbei anwächst und das Modulationsniveau abnimmt. Der zweite Grund für eine Änderung der geforderten Bandbreite ist die Schwankung in dem innerhalb eines RCS(Return Channel for Satellite)-Endgeräts erzeugten Gesamtverkehr. Die sich ändernden Bandbreitenbedürfnisse, die durch diese Effekte verursacht werden, müssen für ein MF-TDMA-Schema verwaltet und optimiert werden.

Der Ressourcenzuteiler (RA; Resource Allocator) im Rückwärtskanal unterliegt einigen speziellen Randbedingungen, die zusätzlich berücksichtigt werden müssen. Da ein RCS-Endgerät berücksichtigt wird, das nur einen Modulator enthalten soll, ist es nicht möglich, gleichzeitig auf zwei verschiedenen Trägern zu übertragen. Diese wichtige Einschränkung muss bei der Zuweisung von Zeitschlitzen und Trägern innerhalb des Ressourcenzuteilers (RA) berücksichtigt werden.

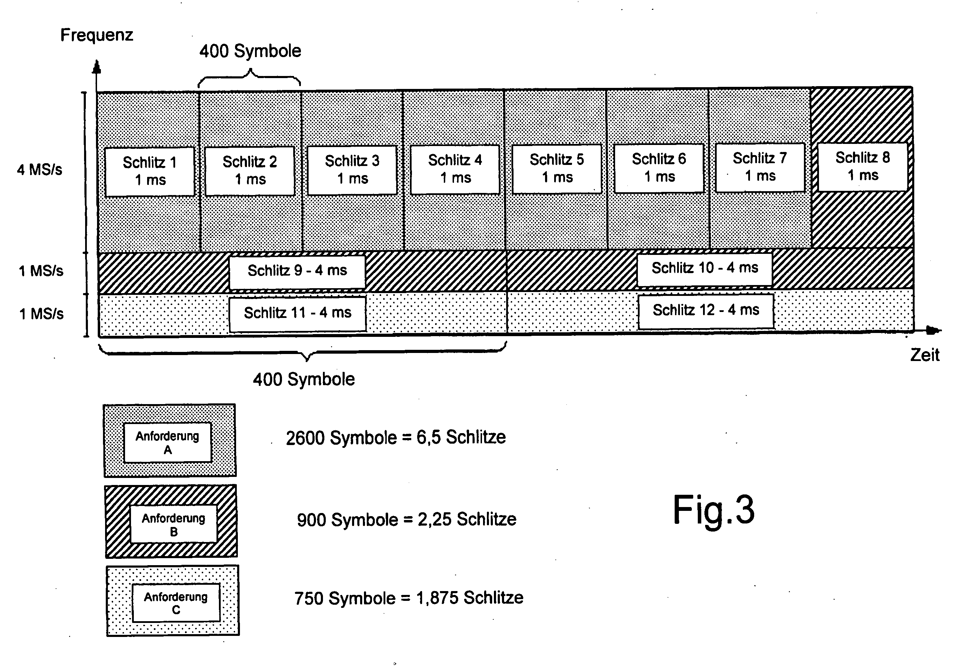

Die Übertragung im RCS-Rückwärtskanal ist in sogenannten Superframes (SF) organisiert. Ein Superframe ist durch eine Frequenz- und Zeitmenge definiert. Der Superframe wird dann in Träger und Zeitschlitze unterteilt. Ein Beispiel für einen Superframe ist in Fig.3 gezeigt.

Das in Fig.3 gezeigte Superframe-Beispiel besteht aus drei Trägern mit verschiedenen Bandbreiten. Sowohl die Dauer der Zeitschlitze als auch die Anzahl von Trägern und die jedem Träger zugewiesene Bandbreite sind völlig flexibel.

Um ACM anzuwenden, ist es notwendig zu bestimmen, welcher Zeitschlitz welche Modulation und Codierung (MC) benutzt. Das Abbilden (Mapping) eines ModCod, d.h. eines Modulations- und Codierratensatzes, auf einen Zeitschlitz kann grundsätzlich entweder statisch, halbdynamisch oder volldynamisch erfolgen.

Das Verfahren nach der vorliegenden Erfindung verwendet das dynamische Abbilden (Dynamic Mapping).

Dynamisches Abbilden bedeutet, dass die Zuordnung einer Modulation und Codierung (MC) zu einem Zeitschlitz für einen einzigen Superframe erfolgt. Das Abbilden kann für den folgenden Superframe völlig unterschiedlich sein. Um aus diesem hohen Anpassungsniveau Vorteil zu ziehen, müssen mehrere Dinge berücksichtigt werden.

Wegen der sich ändernden Kapazitätsbedürfnisse und QoS-Notwendigkeiten und um die Rechenkomplexität in einer vernünftigen Höhe zu halten, ist es nützlich zu schätzen, ob alle empfangenen Anforderungen zugeteilt werden können oder nicht. Die Schätzung ist nicht problemlos infolge der Beschränkung einer Übertragung auf nur einem Träger gleichzeitig und infolge der Tatsache, dass sich die Dauer zeitlich mit der Bandbreite des ausgewählten Trägers ändern kann.

Die Berechnung der benötigten Symbole und der Vergleich mit den verfügbaren Symbolen ist hier nicht ausreichend, da die Kapazitätszuteilung in diskreten Zeitschlitzen organisiert ist. Dies bedeutet, dass es sogar dann, wenn die Anzahl von angeforderten Symbolen geringer als die Anzahl von verfügbaren Symbolen ist, nicht gewährleistet ist, dass die tatsächliche Zuteilung wirklich erfolgen kann.

Sogar dann, wenn die Anzahl der von allen Anforderungen benötigten Schlitze berücksichtigt wird, kann nicht gewährleistet werden, dass alle Anforderungen bedient werden können, und zwar wegen der Randbedingung der verbotenen Parallelübertragung (nur ein Modulator pro Endgerät = nur auf einen Träger kann zu einem Zeitpunkt zugegriffen werden). Dies ist auch in Fig.2 gezeigt, wobei die Anzahl von angeforderten Zeitschlitzen gleich der Anzahl verfügbarer Zeitschlitze ist, aber die Zuweisung, wie sie dort gezeigt ist, nicht ausgeführt werden kann, weil das zu den schraffiert dargestellten Zeitschlitzen gehörende Endgerät nicht auf zwei Trägern zur gleichen Zeit übertragen kann. Solch ein Abbilden muss vermieden werden.

Im Falle, dass die angeforderte Kapazität die verfügbare Kapazität übersteigt, ist es notwendig, ein Zuteilungsschema zu finden, das diesen Konflikt in einer Weise löst, welche sowohl die Durchsatzeffizienz als auch die QoS-Bedürfnisse und die Neutralität der Bandbreitenverteilung berücksichtigt, was durch die vorliegende Erfindung gelungen ist.

Das Verfahren nach der vorliegenden Erfindung lässt sich besonders vorteilhaft im Bereich der mobilen SatellitenfunkKommunikation verwenden, wobei die QoS-Kriterien bei der Übertragung eingehalten werden.

Vorteilhafte und zweckmäßige Weiterbildungen des Verfahrens nach der Erfindung sind in den Unteransprüchen angegeben, die sich unmittelbar oder mittelbar auf den Patentanspruch 1 beziehen.

Die Erfindung wird nachfolgend anhand von Zeichnungen im Einzelnen erläutert. Es zeigen:
- Fig.1: das bereits vorher erläuterte Flussdiagramm für den bekannten RCP-Algorithmus,
- Fig.2: die ebenfalls bereits vorher beschriebene Darstellung eines Satellitenfunk-Multimediasystems mit Vorwärts-und Rückwärtskanälen,
- Fig.3: die ebenfalls bereits vorher beschriebene Darstellung eines Beispiels für einen Superframe,
- Fig.4: eine Flussdiagramm-Darstellung des gemäß der vorliegenden Erfindung verwendeten Algorithmus zur dynamischen Ressourcenzuteilung, und
- Fig.5: in schematischer Darstellung Anwendungsbeispiele für ein entsprechend dem Verfahren nach der Erfindung arbeitendes DVB-S2/RCS-System.

Wie vorher schon erläutert wurde, kann die durch die vorliegende Erfindung vorgeschlagene Architektur sowohl verschiedene Zeitschlitzlängen als auch verschiedene Trägersymbolraten innerhalb eines Superframes behandeln.

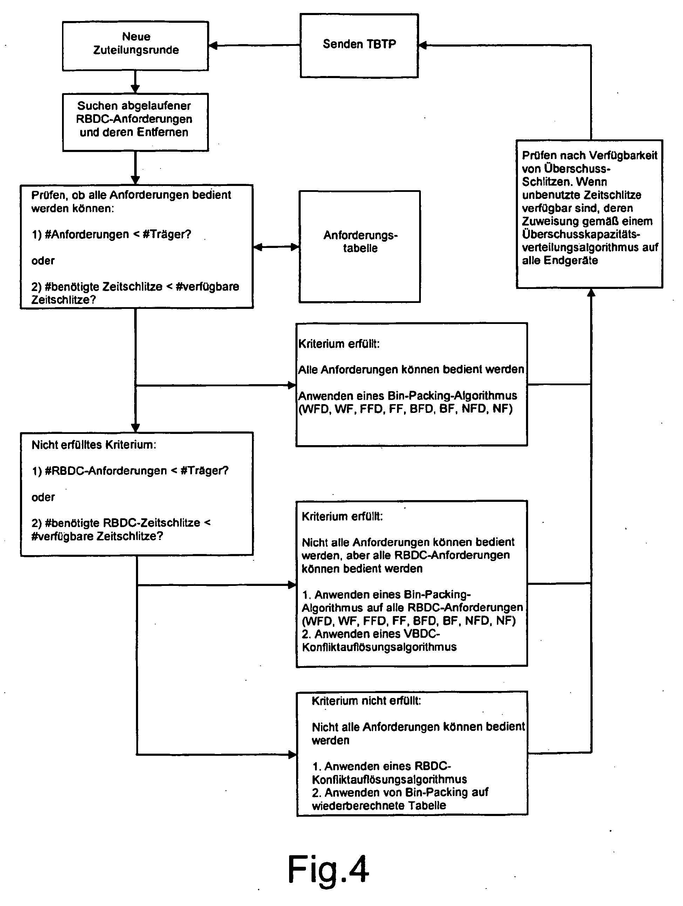

Ein Flussdiagramm für den für das dynamische Abbilden (Dynamic Mapping) nach der vorliegenden Erfindung angewandten Algorithmus ist in Fig.4 gezeigt.

Der Ressourcenzuteilungsprozess (RA-Prozess; Resource Allocation) ist in "Zuteilungsrunden" eingeteilt. Am Anfang einer Zuteilungsrunde überprüft ein Ressourcenzuteiler eine Ressourcenanforderungstabelle (RRT; Resource Request Table) nach abgelaufenen Anforderungen, die zeitabgeschaltet sind (ratenbasierte Anforderungen; RBDC = Rate Based Dynamic Capacity) oder die bereits zugeteilt wurden (volumenbasierte Anforderungen; VBDC = Volume Based Dynamic Capacity). Abgelaufene Einträge werden dann aus der Tabelle entfernt.

Die Unterscheidung zwischen ratenbasierten und volumenbasierten Anforderungen erfolgt, um ratenbasierten Anforderungen, die gewöhnlich strengen Voraussetzungen in Hinsicht auf Verzögerung und Verzögerungsjitter unterliegen, den Vorzug gegenüber den volumenbasierten Anforderungen, z.B. http, email, ftp, ..., bei der später danach ausgeführten Verarbeitung zu geben. Die Dauer einer Zuteilungsrunde ist identisch mit der Dauer eines Superframes. Beim Starten einer Zuteilungsrunde werden alle in der Ressourcenanforderungstabelle RRT aufgelisteten Anforderungen verarbeitet.

Wie vorher bereits erwähnt wurde, ist die Zeit- und Frequenzstruktur im dynamischen Szenario fest, aber die ModCods können individuell einem Zeitschlitz über den Endgeräte-Burst-Zeitplan TBTP (Terminal Burst Time Plan), der separat für jeden Superframe SF übertragen wird, zugewiesen werden. Aus diesem Grund ist es notwendig, die Anzahl von Symbolen, die eine spezifische Anforderung benötigt, zu berechnen. Diese Menge hängt von den tatsächlichen Kanalbedingungen ab. Wenn die bevorzugten ModCods aufgerufen und die benötigten Symbole pro Anforderung berechnet werden, macht der Ressourcenzuteilungsalgorithmus(RAA; Resource Allocation Algorithm)-Mechanismus eine erste Überprüfung dahingehend, ob es eine Möglichkeit gibt, dass alle Anforderungen bedient werden können. Die Anforderungen können pro Ablauf ausgeführt oder pro Endgerät angesammelt werden. Für den tatsächlichen Aufbau des Superframes SF muss der Ressourcenzuteilungsalgorithmus alle Pro-Ablauf-Anforderungen auf Pro-Endgerät-Ebene zusammenfassen, um in der Lage zu sein, nach paralleler Zeitschlitzzuweisung zu suchen, die nicht zulässig ist.

Die erste Schätzung einer möglichen Anpassung erfolgt hier, um die Gesamtrechenkomplexität des Zuteilungsalgorithmus zu senken. Die Rechenlast nimmt ab, weil in Situationen, bei denen alle Anforderungen bedient werden können, keine Anwendung eines Konfliktauflösungsalgorithmus notwendig ist. Die Anwendung des Konfliktauflösungsalgorithmus würde nur zum gleichen Ergebnis führen wie eine direkte Zuteilung, so dass diese Rechenzeit eingespart werden kann. Wenn nicht genug Kapazität verfügbar ist, um alle Anforderungen zu bedienen, macht es Sinn, ratenbasierten (RBDC) Anforderungen Priorität zu geben, da diese für Echtzeit-Anwendungen erfolgen, die strengen QoS-Forderungen, wie z.B. Verzögerung und Verzögerungsjitter, unterliegen. Im Fall, dass nicht genug Kapazität verfügbar ist, um die RBDC-Anforderungen ebenfalls zu bedienen, muss ein Konfliktauflösungsalgorithmus angewandt werden.

Das weitere Vorgehen kann nun in drei Fälle kategorisiert werden:
1. Alle Anforderungen können bedient werden.
2. Nicht alle Anforderungen können bedient werden, aber alle RBDC-Anforderungen können bedient werden.
3. Nicht alle Anforderungen können bedient werden, RBDC-Anforderungen können ebenfalls nicht bedient werden.

### 1. Alle Anforderungen können bedient werden

Es wäre wünschenswert, eine Möglichkeit zu haben, um zu berechnen, ob alle Anforderungen in einem Superframe zugeteilt werden können, ohne tatsächlich den Endgerät-Burst-Zeitplan TBTP (Terminal Burst Time Plan) aufbauen zu müssen.

Aber die Aufgabe einer genauen und richtigen Schätzung ist nicht problemlos. Eine Lösung besteht darin, die von einem Endgerät benötigte Symbolmenge zu berechnen und sie in eine Anzahl von benötigten Zeitschlitzen abzubilden. Wenn die Gesamtzahl von Zeitschlitzen unterhalb der Zahl von im Superframe verfügbaren Zeitschlitzen liegt, gibt es eine gute Möglichkeit, dass alle Anforderungen zugeteilt werden können. Nichtsdestoweniger ist dies keine Garantie, da die Kapazitätszuweisung in Zeitschlitzen (diskrete Menge von Symbolen) organisiert ist. Sogar wenn die Anzahl benötigter Zeitschlitze berücksichtigt wird, ist nicht gewährleistet, ob die Zuweisung wirklich erfolgen kann, da die Randbedingung des Verbots einer Parallelübertragung nicht berücksichtigt wird.

Nichtsdestoweniger bietet dieses Verfahren eine gute Näherung für die Möglichkeit einer Anpassung. Die tatsächliche Zuweisung der Zeitschlitze zu den Trägern erfolgt durch Verwendung eines WFD(Worst Fit Decreasing)-Bin-Packing-Algorithmus. Dies erfolgt zum Optimieren des Anteils der Superframes, der verwendet werden kann, ohne dass Rechenkomplexität allzu stark anwächst. Die WFD-Algorithmen ergeben eine kleine Anzahl von Endgeräten pro Träger und mehr oder weniger gleich verteilte Überschusskapazität. Im allgemeinen kann jeder beliebige andere Bin-Packing-Algorithmus beim Verfahren nach der vorliegenden Erfindung ebenso angewandt werden.

Wenn sich nach dem Bin-Packing herausstellt, dass alle Anforderungen einem Verkehrsburst zugeteilt werden könnten, kann überprüft werden, ob noch einige Überschusskapazitätszeitschlitze verfügbar sind. Wenn es noch einige unbenutzte Verkehrsbursts gibt, können sie als Überschusskapazität zugewiesen werden, um unerwartete Verkehrsschwankungen zu kompensieren. Mögliche Algorithmen für die Verteilung von Überschusskapazität enthalten Combined-free-Demand-Assignment-Algorithmen (Round Robin, Weighted Proportional usw.) oder Vorhersagebedarf-Zuweisungsalgorithmen.

### 2. Nicht alle Anforderungen können bedient werden, aber RBDC-Anforderungen können bedient werden

Im Fall, dass die erste Lastschätzung angibt, dass der Superframe nicht genug Kapazität hat, um alle Anforderungen zu bedienen, wird eine zweite Berechnung der für alle RBDC-Anforderungen benötigten Kapazität ausgeführt. Diese Prioritätensetzung erfolgt, weil es weitaus dringlicher ist, die Zeitsteuerungs- und Durchsatzkriterien für RBDC-Abläufe (z.B. VoIP) als für volumenbasierte Abläufe (z.B. FTP) einzuhalten.

Wenn die Lastschätzung angibt, dass es möglich sein könnte, genug Kapazität zuzuweisen, um alle RBDC-Abläufe zu bedienen, wird wieder Bin-Packing angewandt, um zu überprüfen, ob die Kapazität in einem Superframe tatsächlich zugewiesen werden kann. Dies erfolgt in gleicher Weise wie im vorhergehenden Abschnitt beschrieben. Wenn dies möglich ist, werden die Überschusszeitschlitze unter allen verbleibenden VBDC-Anforderungen verteilt.

Da dieser Zuweisungsprozess nicht weiter die Verteilung der Überschusskapazität behandelt, sondern die Verteilung der benötigten Kapazität, werden verschiedene Konfliktauflösungsalgorithmen für die optimale Zuweisung verwendet, z.B. Weighted-Proportional-Zuweisung (Anforderungen werden kapazitätsproportional zur Größe der Anforderungen unter allen Anforderungen zugewiesen) oder Proportional-Fair-Zuweisung (unter Berücksichtigung des Kanalzustands, Pufferzustands und des Durchsatzes in der Vergangenheit). Wenn Überschusskapazität verfügbar ist, wird sie unter den aktiven Endgeräten verteilt, jedoch lediglich innerhalb des gleichen Trägers, um Träger-Hopping zu verhindern.

### 3. Nicht alle Anforderungen können bedient werden (RBDC-Anforderungen können ebenfalls nicht bedient werden)

Im Fall, dass der Bin-Packing-Algorithmus nicht in der Lage ist, den Zeitschlitz im Superframe in solch einer Weise zuzuweisen, dass alle RBDC-Anforderungen bedient werden können, steht das System einem RBDC-Konflikt gegenüber. Dieser Konflikt wird durch Anwenden eines Konfliktauflösungsalgorithmus (Weighted Proportional, Proportional Fair, ...) aufgelöst. Nach Auflösung des RBDC-Konflikts muss der Bin-Packing-Algorithmus wieder angewandt werden, um einen tatsächlichen Superframe aufzubauen.

Sogar wenn ein Konfliktauflösungsalgorithmus angewandt wird, ist es theoretisch möglich, dass der Bin-Packing-Algorithmus Zeitschlitze nicht für alle Anforderungen zuweisen kann.

In dieser Situation wird vorgeschlagen, so viel Kapazität wie möglich einer Anforderung zuzuweisen, anstatt die Anforderung vollständig fallenzulassen, wie dies bei den anderen vorstehend erwähnten Verfahrensgestaltungen der Fall ist.

Durch Anwenden dieses beim Verfahren nach der vorliegenden Erfindung verwendeten Algorithmus kann Träger-Hopping bequem ohne Verlust an Leistungsfähigkeit vermieden werden.

Die beim Verfahren gemäß der vorliegenden Erfindung zur dynamischen Ressourcenzuteilung in einer MF-TDMA-Verbindung eingesetzten Merkmale werden nachstehend zusammengefasst:
- Eine oder mehrere Entitäten wünschen Daten über ein Satelliten-Funknetz zu anderen Entitäten oder zu einer zentralen Überleiteinrichtung (Gateway) zu übertragen.
- Die geographischen Orte der Entitäten können sich signifikant unterscheiden bzw. ändern. Die erfahrene Kanalqualität ändert sich in der Form von Signal/Rausch-Verhältnis(SNIR)-Änderungen auch mit dem Ort. Beispielsweise hängt sie von der Aktivität anderer Entitäten (Mitnutzerinterferenz), globalen Wetterbedingungen (Regenschwund, klarer Himmel, Wolken) usw. ab.
- Durch die Anwendung von ACM (Adaptive Coding and Modulation) als Schwundminderungstechnik wird versucht, die Übertragungseffizienz in solchen unterschiedlichen Kanälen zu verbessern. In Abhängigkeit von der tatsächlich gewählten Modulation und Codierung ändert sich unter der Voraussetzung einer gleichen Bitratenmenge die Symbolmenge mit den Kanalbedingungen. Die benötigte Symbolmenge kann sowohl bei konstanten Kanalbedingungen als auch dann variieren, wenn sich die benötigte Bitrate der Anwendung ändert.
- Der "dynamische Ressourcenzuteilungsmanager" sollte vor allem wegen der Rechenkomplexität in einer zentralen Entität, z.B. einer Überleiteinrichtung (Gateway), angeordnet werden.
- Der "dynamische Ressourcenzuteilungsmanager" sollte in vorteilhafter Weise alle eintreffenden, von den Entitäten ausgesendeten Anforderungen zur Zuteilung von Bandbreite verwalten. Der Zuteilungsprozess muss die folgenden Eigenschaften berücksichtigen:
   - Kanalzustand und optimaler ModCod der anfordernden Entität (gespeichert in einer Datenbank).
   - Von der Entität angeforderter Betrag der Bitrate oder des Bitvolumens und die Dienstklasse der Sitzung, z.B. ratenbasierte Anforderungen oder volumenbasierte Anforderungen, die in einer Datenbank gespeichert sind.
   - QoS-Forderungen für jede Nachfrage, z.B. die Einhaltung von Verzögerungsgrenzen, Minimierung des Verzögerungsjitters, das Datenpaketverlust-Verhältnis usw. ...), die in einer Datenbank gespeichert sind.
   - Maximierung des Durchsatzes und der Verbindungseffizienz.
   - Neutralität der Kanalzuteilung zwischen anfordernden Entitäten.
   - Minimierung der Rechenlast.
- Auf der Grundlage dieser Informationen muss der "dynamische Ressourcenzuteilungsmanager" einen Burst-Zeitplan berechnen, der den erwähnten Forderungen gehorcht.
- Die in Verbindung mit dem erfindungsgemäßen Verfahren vorgeschlagene Architektur behandelt das dynamische Abbilden (Mapping) von ModCods in Zeitschlitze.
- Für das dynamische ModCod-Abbilden folgt die erfindungsgemäß vorgeschlagene Architektur einer sukzessiven Berechnungsstrategie, um die Rechenlast zu reduzieren. Abhängig von der Last der Anforderungen wird dahingehend entschieden, ob ein Anforderungskonflikt-Auflösungsalgorithmus anzuwenden ist oder ob eine direkte Zuteilung erfolgen kann. Der Algorithmus ist vorteilhaft so ausgebildet, wie er bereits im vorherigen Abschnitt erläutert wurde.
- Die Schaffung des Burst-Zeitplans muss die Randbedingung berücksichtigen, wonach keine Zeitschlitzzuweisung in verschiedenen Trägern zur gleichen Zeit (Parallelismus) zulässig ist.
- In einer Überlastungssituation, bei der Entitäten mehr Kapazität als verfügbar anfordern, wird eine Konfliktauflösungsstrategie befolgt.
   - Ratenbasierten (RBDC) Anforderungen wird vor volumenbasierten (VBDC) Anforderungen Priorität gegeben.
   - In Abhängigkeit von der Zusammensetzung der Anforderungen wird ein Konfliktauflösungsalgorithmus in derjenigen Anforderungskategorie angewandt, die nicht zugewiesen werden kann. Der Konfliktreduzierungsalgorithmus reduziert die Größe aller Anforderungen bis zu einer Ebene, bei der alle Entitäten so viel Kapazität wie möglich bekommen, dies jedoch unter Berücksichtigung der erwähnten QoS-Kriterien (Verzögerung, Verzögerungsjitter, Maximierung der Verbindungseffizienz, Durchsatz, Neutralität).
- Zum Optimieren der Belegung eines Rahmens wird ein Bin-Packing-Algorithmus angewandt, z.B. Worst Fit Decreasing oder Worst Fit, der entscheidet, welchen Anforderungen Kapazität in welchem Träger zugewiesen werden soll. Dieser Bin-Packing-Algorithmus optimiert die Zuweisung freier Kapazitäten (FCA; Free Capacity Assignment), die z.B. für unvorhergesehene Verkehrsbursts verwendet werden können.
- Schließlich wird der Übertragungsburst-Zeitplan an alle Entitäten übertragen.

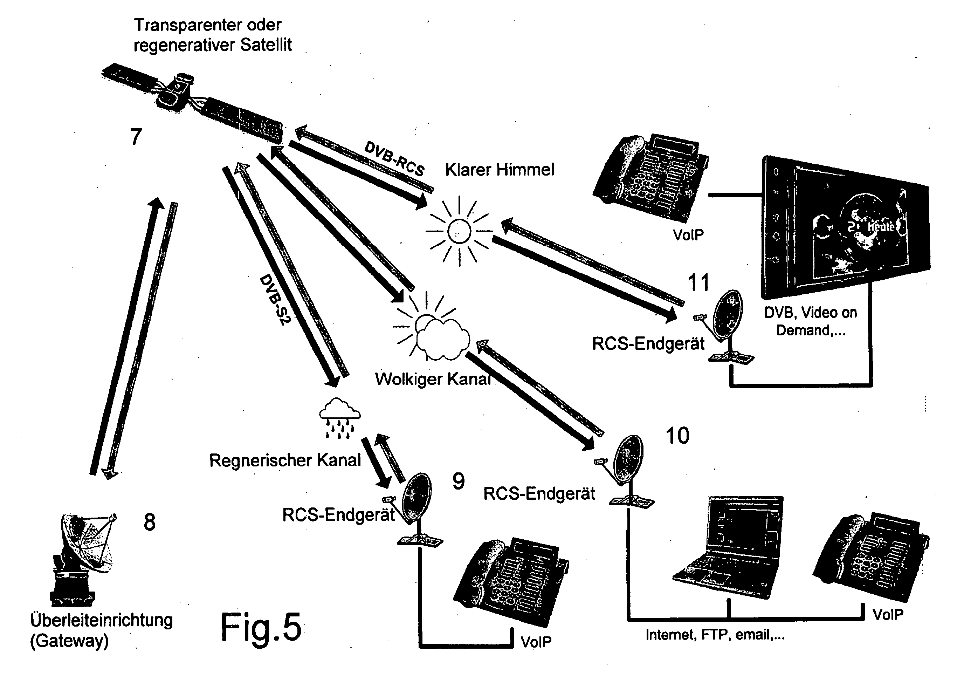

Das Verfahren nach der vorliegenden Erfindung ist vorteilhaft anwendbar in Verbindung mit einer Systemarchitektur, die Vorwärts- und Rückwärtskanalübertragung im Rahmen von DVB-S2 (Vorwärtskanal) und DVB-RCS (Rückwärtskanal) mit Anwendung von ACM (Adaptive Coding and Modulation) als Schwundminderungstechnik verwaltet. Beispiele solcher Anwendungen sind in Fig.5 schematisch dargestellt.

Die Verwendung eines solchen Systems soll Nutzer dazu befähigen, eine Vielfalt interaktiver Dienste, wie z.B. Internet-Verkehr (http), E-Mail, FTP, Video-Conferencing, Audio Conferencing, VoIP usw. zu benutzen, wobei die Ausnutzung der Verbindungskapazitäten optimiert werden soll.

Im Rahmen einer derartigen Anwendung ist ein geostationärer Satellit 7 eingesetzt, um auf der Erdoberfläche einen großen geographischen Bereich zu beleuchten, der in Strahlen unterteilt wird. Eine mit einer Bodenstationsantenne ausgestattete zentrale Entität, z.B. eine Überleiteinrichtung (Gateway) 8, verwaltet die Ressourcenzuteilung für die ebenfalls mit Parabolantennen ausgerüsteten Bodenendgeräte 9, 10, 11 innerhalb eines Strahls.

Die in Fig.5 gezeigte zentrale Überleiteinrichtung 8 enthält den in Fig.4 als Flussdiagramm dargestellten dynamischen Ressourcenzuteilungsmechanismus. Alle Bodenendgeräte 9, 10, 11 innerhalb eines Strahls werden durch den gleichen Übertragungsburst-Zeitplan geplant, der anweist, welchem Endgerät 9, 10, 11 es erlaubt wird, zu welcher Zeit, zu welcher Mittenfrequenz und zu welcher Bandbreite zu senden. Für jede neue Sitzung, z.B. VoIP-Sitzung oder eine Webseite, sendet das Endgerät 9 bzw. 10 bzw. 11 über seinen Rückwärtskanal RCS im Wege über den Satelliten 7 eine Kapazitätsanforderung zur Überleiteinrichtung 8.

In Abhängigkeit von der Anwendungsart wird diese Anforderung eine Anforderung einer ratenbasierten Kapazität RBDC (z.B. VoIP mit konstanter Bitrate) oder einer volumenbasierten Kapazität VBDC (z.B. Internet mit keinen strengen Verzögerungs-und Verzögerungsjitterforderungen, aber spezifischem Volumen) sein. Die Überleiteinrichtung 8 sammelt auch Informationen über die tatsächlichen Kanalzustände aller teilnehmenden Endgeräte 9, 10, 11 und speichert sie in ihren Datenbänken ein. Die Übertragung im Rückwärtskanal RCS wird in Superframes, z.B. von einer Periodenlänge von 50 ms organisiert. Diese Periode bestimmt auch die Länge einer Zuteilungsrunde.

Innerhalb dieser Zeit werden alle eintreffenden Anforderungen gesammelt und danach für die nächste Periode verarbeitet. Der Ressourcenzuteiler (RA) speichert alle eintreffenden Anforderungen in einer internen Datenbank und trennt sie hinsichtlich RBDC- und VBDC-Anforderungen. Wenn die Menge der benötigten Kapazität die verfügbare Kapazität nicht überschreitet, wird ein Bin-Packing-Algorithmus angewandt, um einen optimalen Gebrauch von der Kapazität zu machen, wenn der Übertragungsburst-Zeitplan vorbereitet ist.

Der WFD(Worst Fit Decreasing)-Algorithmus ist eine gute Wahl für den Bin-Packing-Algorithmus, da er zu einer gleichen Verteilung von Endgeräten pro Träger und zu einer gleichförmigen Verteilung von Überschusskapazität unter allen Trägern führt. Aber im allgemeinen könnte jeder beliebige Bin-Packing-Algorithmus verwendet werden. Diese Überschusskapazität kann dann einfach allen Endgeräten auf dem gleichen Träger als Überschusskapazität zugewiesen werden, ohne die Notwendigkeit des Träger-Hoppings.

Wenn die Menge von RBDC- und VBDC-Anforderungen die verfügbare Kapazität übersteigt, aber die RBDC-Anforderungen unterhalb der Kapazitätsgrenze liegen, werden allen RBDC-Anforderungen Zeitschlitze durch Anwenden z.B. eines WFD(Worst Fit Decreasing)-Algorithmus zugewiesen. Für die VBDC-Anforderungen, die nicht alle bedient werden können, kann ein Konfliktauflösungsalgorithmus angewandt werden, wie z.B. die Weighted-Proportional-Zuweisung (Zuweisung proportional zur Größe der Anforderung bei allen Anforderungen) oder die Proportional-Fair-Zuweisung (Zuweisung auf der Grundlage von Kanalbedingungen, Pufferzustand und Neutralität in der Vergangenheit).

Wenn auch die RBDC-Anforderungsgröße die verfügbare Kapazität übersteigt, wird der Konfliktauflösungsalgorithmus auf diesen Anforderungstyp angewandt. Es können wiederum mehrere verschiedene Algorithmen verwendet werden, wie z.B. die Weighted-Proportional-Zuweisung oder die Proportional-Fair-Zuweisung.

Eventuelle Überschusskapazität wird dann entsprechend einem Überschusskapazität-Verteilungsalgorithmus unter allen Endgeräten auf dem gleichen Träger verteilt, um Träger-Hopping zu vermeiden.

### Bezugszeichenliste

- 1, 2, 3: Endgerät
- 4: Überleiteinrichtung (Gateway)
- 5: Erdboden
- 6: Kommunikationssatellit
- 7: Geostationärer Satellit
- 8: Überleiteinrichtung (Gateway)
- 9, 10, 11: Bodenendgeräte mit DVB-RCS-Kanal
- DVB-RCS: Digital Video Broadcasting-Return Channel for Satellite
- DVB-S2: Digital Video Broadcasting-Satellite 2

## Patentansprüche

1. Verfahren zur dynamischen Ressourcenzuteilung in einem interaktiven Satellitenfunknetz-Multimediasystem mit Zuweisung von Zeitschlitzen im mit Multi-Frequency Time Division Multiple Access-Technik, abgekürzt MF-TDMA, arbeitenden Rückwärtskanal mittels eines dynamischen Ressourcenzuteilungsmanagers, der alle eintreffenden Anforderungen, die von Entitäten ausgesendet werden, die eine Übertragung von Daten über das Satellitenfunknetz zu anderen Entitäten oder einer zentralen Überleiteinrichtung wünschen, zur Zuteilung von Bandbreite unter Berücksichtigung von Eigenschaften und Forderungen beinhaltenden Informationen verwaltet und einen den Informationen gehorchenden Burst-Zeitplan berechnet, **dadurch gekennzeichnet, dass** der dynamische Ressourcenzuteilungsmanager bei der Berechnung des Burst-Zeitplanes die Randbedingung berücksichtigt, wonach zur Vermeidung einer Parallelübertragung nur ein Zeitschlitz zur gleichen Zeit in einem der verschiedenen Träger zugewiesen werden darf und folglich die anderen Träger in der gleichen Zeit keine Zeitschlitzzuweisung aufweisen dürfen, dass ein dynamisches Abbilden (Mapping) von Modulations- und Codierratensätzen, sogenannten ModCods, in die Zeitschlitze jeweils eines Superframes mittels einer Architektur vorgenommen wird, die einer sukzessiven Berechnungsstrategie folgt, wobei abhängig von der Last der Anforderungen dahingehend entschieden wird, ob ein Anforderungskonflikt-Auflösungsalgorithmus anzuwenden ist oder ob eine direkte Zuteilung erfolgt, dass in einer Überlastungssituation, bei der Entitäten mehr Kapazität als verfügbar anfordern, eine Konfliktauflösungsstrategie befolgt wird, die darin besteht, dass ratenbasierten Anforderungen, abgekürzt RBDC Anforderungen (RBDC = Rate Based Dynamic Capacity) vor volumenbasierten Anforderungen, ubgekürzt VBDC Anforderungen (VBDC = Volume Based Dynamic Capacity) Priorität für die Zuteilung gegeben wird und in Abhängigkeit von der Zusammensetzung der Anforderungen ein Konfliktauflösungsalgorithmus in derjenigen Anforderungskategorie, ratenbasiert oder volumenbasiert, angewandt wird, die nicht zugewiesen werden kann, so dass der Konfliktauflösungsalgorithmus die Größe.aller Anforderungen in derjenigen Anforderungskategorie bis zu einer Ebene reduziert, bei der alle Entitäten ihre maximal verfügbare Kapazität bekommen, jedoch unter Berücksichtigung von QoS-Kriterien, dass zum Optimieren der Belegung eines Superframes ein Bin-Packing-Algorithmus angewandt wird, der entscheidet, welchen Anforderungen Kapazität in welchem Träger zugewiesen werden soll, wobei dieser Bin-Packing-Algorithmus die Zuweisung freier Kapazitäten (FCA; Free Capacity Assignment) optimiert, und dass schließlich der Übertragungsburst-Zeitplan an alle Entitäten übertragen wird.

2. Verfahren nach Anspruch 1, **dadurch gekennzeichnet, dass** als Bin-Packing-Algorithmus ein Worst-Fit-Decreasing- oder Worst-Fit-Algorithmus verwendet wird.

3. Verfahren nach Anspruch 1, **dadurch gekennzeichnet, dass** die freien Kapazitäten für unvorhergesehene Verkehrsbursts verwendet werden.

4. Verfahren nach einem der vorhergehenden Ansprüche, **gekennzeichnet durch** die Anwendung von Adaptive Coding and Modulation, abgekürzt ACM, als Schwundminderungstechnik.

5. Verfahren nach Anspruch 1, **dadurch gekennzeichnet, dass** der Gesamtprozess der Zuteilung und Verteilung von Ressourcen in einer zentral angeordneten Überleiteinrichtung ausgeführt wird.

6. Verfahren nach einem der vorhergehenden Ansprüche, **dadurch gekennzeichnet, dass** der dynamische Ressourcenzuteilungsmanager alle eintreffenden, von den Entitäten ausgesendeten Anforderungen zur Zuteilung von Bandbreite verwaltet und der Zuteilungsprozess die die folgenden Eigenschaften und Forderungen beinhaltenden Informationen berücksichtigt:
- Kanalzustand und optimaler ModCod der anfordernden Entität, die in einer Datenbank gespeichert sind;
- von der Entität angeforderter Betrag der Bitrate oder des Bitvolumens und die Dienstklasse der Sitzung, die in einer Datenbank gespeichert sind;
- QoS-Forderungen für jede Nachfrage, die in einer Datenbank gespeichert sind;
- Maximierung des Durchsatzes und der Verbindungseffizienz;
- Neutralität der Kanalzuteilung zwischen anfordernden Entitäten;
- Minimierung der Rechenlast.

7. Verfahren nach einem der vorhergehenden Ansprüche, **dadurch gekennzeichnet, dass** die Architektur sowohl verschiedene Zeitschlitzlängen als auch verschiedene Symbolraten innerhalb eines Superframes behandelt.

8. Verfahren nach einem der vorhergehenden Ansprüche, **dadurch gekennzeichnet, dass** der Ressourcenzuteilungsprozess (RA-Prozess; Resource Allocation) in "Zuteilungsrunden" eingeteilt ist und dass die Dauer einer Zuteilungsrunde identisch mit der Dauer eines Superframes ist.

9. Verfahren nach Anspruch 8, **dadurch gekennzeichnet, dass** am Anfang einer Zuteilungsrunde ein Ressourcenzuteiler eine Ressourcenanforderungstabelle (RRT; Resource Request Table) nach abgelaufenen RBDC-Anforderungen oder bereits zugeteilten VBDC-Anforderungen überprüft, dass abgelaufene Anforderungen dann aus der Tabelle entfernt werden, wobei die Unterscheidung zwischen RBDC- und VBDC-Anforderungen erfolgt, um RBDC-Anforderungen, die gewöhnlich strengen Voraussetzungen in Hinsicht auf Verzögerung und Verzögerungsjitter unterliegen, den Vorzug gegenüber den VBDC-Anforderungen bei der später danach ausgeführten Verarbeitung zu geben, und dass am Beginn einer Zuteilungsrunde alle in der Ressourcenanforderungstabelle aufgelisteten Anforderungen verarbeitet werden.

10. Verfahren nach einem der vorhergehenden Ansprüche, **dadurch gekennzeichnet, dass** bei fester Zeit- und Frequenzstruktur im dynamischen Szenario die ModCods individuell einem Zeitschlitz über den Endgeräte-Burst-Zeitplan (TBTP, Terminal Burst Time Plan), der separat für jeden Superframe übertragen wird, zugewiesen werden.

11. Verfahren nach Anspruch 10, **dadurch gekennzeichnet, dass** die Anzahl von Symbolen, die eine spezifische Anforderung benötigt, berechnet wird, wobei diese Menge von den tatsächlichen Kanalbedingungen abhängt.

12. Verfahren nach Anspruch 11, **dadurch gekennzeichnet, dass** nach Aufruf von ModCods und Berechnung der pro Anforderung benötigten Symbole der Ressourcenzuteilungsalgorithmus(RAA; Resource Allocation Algorithm)-Mechanismus eine erste Überprüfung dahingehend macht, ob es eine Möglichkeit gibt, dass alle Anforderungen bedient werden können.

13. Verfahren nach Anspruch 12, **dadurch gekennzeichnet, dass** für den tatsächlichen Aufbau des Superframes der Ressourcenzuteilungsalgorithmus alle Pro-Ablauf-Anforderungen auf Pro-Endgerät-Ebene zusammenfasst, um in der Lage zu sein, nach paralleler Zeitschlitzzuteilung zu suchen, die nicht zulässig ist.

14. Verfahren nach Anspruch 12 und 13, **dadurch gekennzeichnet, dass** zur Senkung der Gesamtrechenkomplexität des Zuteilungsalgorithmus hiernach eine erste Schätzung einer möglichen Kapazitätsanpassung für eine direkte Ressourcenzuteilung erfolgt, da die Rechenlast abnimmt, weil in Situationen, bei denen alle Anforderungen bedient werden können, keine Anwendung eines nur zum gleichen Ergebnis führenden Konfliktauflösungsalgorithmus notwendig ist.

15. Verfahren nach Anspruch 1, **dadurch gekennzeichnet, dass** das Vorgehen in drei Fälle kategorisiert wird, nämlich:
a) Alle Anforderungen können bedient werden;
b) nicht alle Anforderungen können bedient werden, aber alle RBDC-Anforderungen können bedient werden;
c) nicht alle Anforderungen können bedient werden, RBDC-Anforderungen können ebenfalls nicht bedient werden.

16. Verfahren nach Anspruch 15, **dadurch gekennzeichnet, dass** für den Fall a) (alle Anforderungen können bedient werden) gilt:
dass die von einem Endgerät benötigte Symbolmenge berechnet und sie in eine Anzahl von benötigten Zeitschlitzen abgebildet wird, dass dann, wenn die Gesamtzahl von Zeitschlitzen unterhalb der Zahl von im Superframe verfügbaren Zeitschlitzen liegt, die tatsächliche Zuteilung der Zeitschlitze zu den Trägern durch Verwendung eines Bin-Packing-Algorithmus erfolgt, der eine kleine Anzahl von Endgeräten pro Träger und weitgehend gleich verteilte Überschusskapazität ergibt.

17. Verfahren nach Anspruch 16, **dadurch gekennzeichnet, dass** dann, wenn sich nach dem Bin-Packing herausstellt, dass alle Anforderungen einem Verkehrsburst zugeteilt werden könnten, überprüft wird, ob noch einige Überschusskapazitätszeitschlitze verfügbar sind.

18. Verfahren nach Anspruch 17, **dadurch gekennzeichnet, dass** dann, wenn es noch einige unbenutzte Verkehrsbursts gibt, diese als Überschusskapazität zugeteilt werden, um unerwartete Verkehrsschwankungen zu kompensieren.

19. Verfahren nach Anspruch 18, **dadurch gekennzeichnet, dass** mögliche Algorithmen für die Verteilung von Überschusskapazität Combined-free-Demand-Assignment-Algorithmen oder Vorhersagebedarf-Zuweisungsalgorithmen enthalten.

20. Verfahren nach Anspruch 19, **dadurch gekennzeichnet, dass** für den Fall b) (nicht alle Anforderungen können bedient werden, aber alle RBDC-Anforderungen können bedient werden) gilt:
dass im Fall, dass die erste Lastschätzung angibt, dass der Superframe nicht genug Kapazität hat, um alle Anforderungen zu bedienen, eine zweite Berechnung der für alle RBDC-Anforderungen benötigten Kapazität ausgeführt wird, wobei diese Prioritätensetzung erfolgt, weil es weitaus dringlicher ist, die Zeitsteuerungs- und Durchsatzkriterien für RBDC-Abläufe als für volumenbasierte Abläufe, einzuhalten, dass dann, wenn die Lastschätzung angibt, dass es möglich sein könnte, genug Kapazität zuzuteilen, um alle RBDC-Abläufe zu bedienen, wieder Bin-Packing angewandt wird, um zu überprüfen, ob die Kapazität in einem Superframe tatsächlich zugewiesen werden kann, und dass dann, wenn dies möglich ist, die Überschusszeitschlitze unter allen verbleibenden VBDC-Anforderungen verteilt werden.

21. Verfahren nach Anspruch 20, **dadurch gekennzeichnet, dass,** da dieser Zuweisungsprozess nicht weiter die Verteilung der Überschusskapazität behandelt, sondern die Verteilung der benötigten Kapazität, ein Konfliktauflösungsalgorithmus für die optimale Zuweisung verwendet wird.

22. Verfahren nach Anspruch 21, **dadurch gekennzeichnet, dass** als Konfliktauflösungsalgorithmus ein Weighted-Proportional-Zuweisungsalgorithmus verwendet wird, bei dem Anforderungen kapazitätsproportional zur Größe der Anforderungen unter allen Anforderungen zugewiesen werden.

23. Verfahren nach Anspruch 21, **dadurch gekennzeichnet, dass** als Konfliktauflösungsalgorithmus ein Proportional-Fair-Zuweisungsalgorithmus unter Berücksichtigung des Kanalzustands verwendet wird.

24. Verfahren nach Anspruch 20 bis 23, **dadurch gekennzeichnet, dass** dann, wenn Überschusskapazität verfügbar ist, diese unter den aktiven Endgeräten verteilt wird, jedoch lediglich innerhalb des gleichen Trägers, um Träger-Hopping zu verhindern.

25. Verfahren nach Anspruch 15 und 20, **dadurch gekennzeichnet, dass** für den Fall c) (nicht alle Anforderungen können bedient werden, RBDC-Anforderungen können ebenfalls nicht bedient werden) gilt:
dass im Fall, dass der Bin-Packing-Algorithmus nicht in der Lage ist, Zeitschlitze im Superframe in solch einer Weise zuzuweisen, dass alle RBDC-Anforderungen bedient werden können, das System einem RBDC-Konflikt gegenübersteht und dieser Konflikt durch Anwenden eines Konfliktauflösungsalgorithmus aufgelöst wird, und dass nach Auflösung des RBDC-Konflikts der Bin-Packing-Algorithmus wieder angewandt wird, um einen wirklichen Superframe aufzubauen.

26. Verfahren nach Anspruch 25, **dadurch gekennzeichnet, dass** als Konfliktauflösungsalgorithmus ein Weighted-Proportional-Algorithmus oder ein Proportional-Fair-Algorithmus verwendet wird.

27. Verfahren nach Anspruch 25 oder 26, **dadurch gekennzeichnet, dass** im Falle, dass ein Konfliktauflösungsalgorithmus angewandt wird und der Bin-Packing-Algorithmus Zeitschlitze nicht für alle Anforderungen zuweisen kann, die maximal verfügbare Kapazität einer Anforderung zugewiesen wird.

28. Verwendung des Verfahrens zur dynamischen Ressourcenzuteilung nach einem der vorhergehenden Ansprüche bei der mobilen Satellitenfunkkommunikation.

## Claims

1. Method for resource allocation in an interactive wireless satellite network multimedia system comprising the allocation of time slots in an uplink channel which operates with the multi-frequency time division multiple access technique, abbreviated as MF-TDMA, by means of dynamic a resource allocation manager which manages all incoming requests sent by entities requesting transmission of data via the wireless satellite network to another entity or to a central transfer facility, for the allocation of bandwidths with consideration to information containing properties and requirements, and which calculates a burst time plan following this information, **characterized in that,** in calculating the burst time plan, the dynamic resource allocation manager takes into consideration the marginal condition that, in order to prevent a parallel transmission, only one time slot may be allocated at a time in one of the different carriers and, consequently, the other carriers must not have a time slot allocation at the same time, that a dynamic mapping of modulation and code rate sets, so-called ModCods, into the time slots of one respective super frame is effected by an architecture that follows a successive calculation strategy, wherein, depending on the load of requests, it is decided whether a request conflict resolution algorithm is to be applied or whether a direct allocation is made,
that in an overload situation, in which entities request more capacity than available, a conflict resolution strategy is followed which consists in giving rate based dynamic capacity requests, abbreviated as RBDC, allocation priority over volume based dynamic capacity requests, abbreviated as VBDC, and in applying, depending on the composition of the requests, a conflict resolution algorithm to the category of requests, rate based or volume based, which cannot be allocated, so that the conflict resolution algorithm reduces the magnitude of all requests in the category of requests down to a level where all entities receive their maximum available capacity, however, with consideration to QoS criteria,
that, for optimizing the seizure of a super frame, a bin packing algorithm is applied, which decides to which requests shall be allocated capacity in which carriers, wherein this bin packing algorithm optimizes the allocation of free capacities (FCA),
and that the transmission burst time plan is eventually transmitted to all entities.

2. Method according to claim 1, **characterized in that** a worst fit decreasing algorithm or a worst fit algorithm is used as the bin packing algorithm.

3. Method of claim 1, **characterized in that** the free capacities are used for unexpected traffic bursts.

4. Method of one of the preceding claims, **characterized by** the application of adaptive coding and modulation, abbreviated as ACM, as a loss reduction technique.

5. Method of claim 1, **characterized in that** the overall process of allocating and distributing resources is executed in a centrally arranged transfer facility.

6. Method of one of the preceding claims, **characterized in that** the dynamic resource allocation manager manages all incoming requests emitted by the entities for the allocation of bandwidths and wherein the allocation process takes into account the information including the following properties and requirements:
channel condition and optimum ModCod of the requesting entity stored in a data base;
amount of the bit rate or of the bit volume requested by the entity and the service category of the session stored in a data base;
QoS requirements for each request, said requirements being stored in a data base;
maximization of the throughput and the link efficiency;
neutrality of the channel allocation among requesting entities;
minimization of computational burden.

7. Method of one of the preceding claims, **characterized in that** the architecture treats both different time slot lengths and different symbol rates within a super frame.

8. Method of one of the preceding claims, **characterized in that** the resource allocation process (RA process) is divided into "allocation turns" and that the duration of an allocation turn is identical to the duration of a super frame.

9. Method of claim 8, **characterized in that,** at the beginning of each allocation turn, a resource allocator checks a resource request table (RRT) for expired RBDC requests or for VBDC requests, which have already been allocated, that expired requests are then deleted from the table, where a distinction is made between RBDC requests and VBDC requests, so as to prefer RBDC requests, which generally are subject to strict requirements with respect to delay and delay jitter, over VBDC requests in the processing executed later on, and that, at the beginning of an allocation turn, all requests listed in the resource request table are processed.

10. Method of one of the preceding claims, **characterized in that,** given a fixed time and frequency structure in the dynamic scenario, the ModCods are allocated individually to a time slot through the terminal burst time plan (TBTP) that is transmitted separately for each super frame.

11. Method of claim 10, **characterized in that** the number of symbols that a specific request requires is calculated, wherein this amount depend on the actual channel conditions.

12. Method of claim 11, **characterized in that** after ModCods have been called and the symbols required per request have been calculated, the resource allocation algorithm (RAA) mechanism makes a first check for a possibility to service all requests.

13. Method of claim 12, **characterized in that,** for the actual structure of the super frame, the resource allocation algorithm combines all per-operation requests on a per-terminal level so as to be able to check for parallel time slot allocation that is not allowed.

14. Method of claims 12 and 13, **characterized in that,** for a reduction of the overall computational complexity of the allocation algorithm, a first estimate of a possible capacity adaptation for a direct allocation of resources is performed thereafter, since the computational burden decreases, because in situations where all requests can be serviced, the application of a conflict resolution algorithm that would only lead to the same result is not necessary.

15. Method of claim 1, **characterized in that** the proceeding is categorized into three cases, namely:
a) all requests can be serviced;
b) not all requests can be serviced, but all RBDC requests can be serviced;
c) not all requests can be serviced, RBDC requests cannot be serviced either.

16. Method of claim 15 **characterized in that,** for the case a) (all requests can be serviced), it holds:
that the amount of symbols required by a terminal is calculated and mapped into a number of required time slots, that, if the total number of time slots is below the number of time slots available in the super frame, the actual allocation of time slots to the carriers is effected by using a bin packing algorithm that results in a small number of terminals per carrier and substantially equally distributed excess capacity.

17. Method of claim 16, **characterized in that** if it turns out after bin packing that all requests could be allocated to a traffic burst, it is checked whether some excess capacity time slots are still available.

18. Method of claim 17, **characterized in that,** if there still are some unused traffic bursts, these are allocated as excess capacity, to compensate for unexpected traffic variations.

19. Method of claim 18, **characterized in that** possible algorithms for the distribution of excess capacities include combined free demand assignment algorithms or prediction demand allocation algorithms.

20. Method of claim 19, **characterized in that,** for the case b) (not all requests can be serviced, but all RBDC requests can be serviced), it holds:
that, if the first load estimate indicates that the super frame does not have enough capacity to service all requests, a second calculation of the capacity required for all RBDC requests is performed, this assignment of priorities being made because it is far more important to observe the timing and throughput criteria for RBDC operations than for volume-based operations, that, if the load estimate indicates that it could be possible to allocate enough capacity to service all RBDC operations, bin packing is again applied in order to check whether the capacity in a super frame can actually be allocated, and that, if this is possible, the excess time slots are distributed among all remaining VBDC requests.

21. Method of claim 20, **characterized in that,** since this allocation process does not further treat the distribution of excess capacity, but the distribution of the required capacity, a conflict resolution algorithm is used for an optimum allocation.

22. Method of claim 21, **characterized in that** a weighted proportional allocation algorithm is used as the conflict resolution algorithm, wherein requests are allocated among all requests in a manner capacity-proportional to the magnitude of the requests.

23. Method of claim 21, **characterized in that** a proportional fair allocation algorithm is used as the conflict resolution algorithm with consideration to the channel condition.

24. Method of one of claims 20 to 23, **characterized in that,** if excess capacity is available, the same is distributed among the active terminals, but only within the same carrier, in order to avoid carrier hopping.

25. Method of claims 15 and 20, **characterized in that,** for the case c) (not all requests can be serviced, RBDC requests cannot be serviced either), it holds:
that, if the bin packing algorithm is not able to allocate time slots in the super frame in such a manner that all RBDC requests can be serviced, the system is confronted with a RBDC conflict and this conflict is resolved by the application of a conflict resolution algorithm, and that, after the resolution of the RBDC conflict, the bin packing algorithm is applied again to build a true super frame.

26. Method of claim 25, **characterized in that** a weighted proportional algorithm or a proportional fair algorithm is used as the conflict resolution algorithm.

27. Method of claim 25 or 26, **characterized in that,** if a conflict resolution algorithm is applied and the bin packing algorithm cannot allocate time slots to all requests, the maximum available capacity is allocated to a request.

28. Use of the method for resource allocation of one of the preceding claims in mobile wireless satellite communication.

## Revendications

1. Procédé destiné à l'attribution de ressources dans un système multimédia interactif en réseau radio par satellite comprenant l'attribution des intervalles de temps dans une liaison montante opérant selon la technique Multi-Frequency Time Division Multiple Access, abrégé par MF-TDMA, moyennant un gestionnaire d'attribution de ressources dynamique gérant toutes les requêtes arrivantes émises par des entités demandant une transmission de données á travers le réseau radio par satellite à d'autres entités ou un dispositif central de transfert, pour attribuer des largeurs de bande tout en prenant en compte des informations contenant des propriétés et des demandes, et qui calcule un horaire de rafale soumis auxdites informations, **caractérisé en ce qu'**en calculant l'horaire de rafale, le gestionnaire d'attribution de ressources dynamique prend en compte la condition marginale, selon laquelle, pour éviter une transmission en parallèle, seulement une intervalle de temps doit être attribuée à la fois à un des différents porteurs et, par conséquence, les autres porteurs ne doivent pas présenter une attribution d'intervalle de temps pendant cette temps, qu'un mappage (mapping) dynamique de taux de modulation et de codage, appelé ModCods, dans les intervalles de temps de super-trames respectives, est effectué moyennant une architecture qui suit une stratégie de calcul successive, dans laquelle il est décidée, en fonction de la charge de requêtes, s'il faut appliquer un algorithme de résolution des conflits d'attribution ou si une attribution directe est effectuée, que dans une situation de surcharge, dans laquelle des entités requièrent plus capacité que disponible, une stratégie de résolution de conflits est suivie, selon laquelle, en ce qui concerne l'attribution, des requêtes basées sur le débit, abrégées par requêtes RBDC (RBDC = Rate Based Dynamic Capacity), ont priorité sur des requêtes basées sur la quantité, abrégées par requêtes VBDC (VBDC = Volume Based Dynamic Capacity), et qu'en fonction de la composition des requêtes, un algorithme de résolution de conflits est utilisé dans cette catégorie de requêtes, basées sur le débit ou la quantité, qui ne peut pas être attribuée, de manière que l'algorithme de résolution de conflits réduit la magnitude de toutes requêtes dans ladite catégorie de requêtes jusqu'à un niveau où toutes les entités obtiennent leur capacité maximale disponible, tout en observant des critères QoS, qu'afin d'optimaliser l'occupation d'une super-trame on utilise un algorithme du type "Bin Packing" qui décide auxquelles requêtes sont à attribuer des capacités dans quel porteur, cet algorithme du type "Bin Packing" optimalisant l'attribution de capacités libres (FCA; Free Capacity Assignment), et que, finalement, l'horaire de rafales de transmission est transmit à toutes les entités.

2. Procédé selon la revendication 1, **caractérisé en ce que** l'algorithme du type "Bin Packing" est un algorithme du type "Worst Fit Decreasing" ou un algorithme du type "Worst fit".

3. Procédé selon la revendication 1, **caractérisé en ce que** les capacités libres sont utilisées pour des rafales de trafic inattendues.

4. Procédé selon l'une quelconque des revendications précédentes, **caractérisé par** l'application de codage et modulation adaptive, abrégée par ACM, comme technique de réduction d'évanouissement.

5. Procédé selon la revendication 1, **caractérisé en ce que** le procès global d'attribution et distribution de ressources est effectué dans un dispositif de transfert disposé de manière centrale.

6. Procédé selon l'une quelconque des revendications précédentes, **caractérisé en ce que** le gestionnaire d'attribution de ressources dynamique gère toutes les requêtes arrivantes émises par les entités pour attribuer des largeurs de bande et que le procès d'attribution prend en compte les informations contenant les propriétés et demandes suivantes:
- l'état du canal et ModCod optimal de l'entité requérante, stockés dans une base de données;
- la magnitude du débit binaire ou de la quantité binaire requise par l'entité et la catégorie de service de la session, qui est stockée dans une base de données;
- des demandes QoS pour chaque requête, qui sont stockées dans une base de données;
- la maximalisation du débit et de l'efficacité de la liaison;
- la neutralité de l'attribution de canaux parmi les entités;
- la minimalisation de la complexité des calculs.

7. Procédé selon l'une quelconque des revendications précédentes, **caractérisé en ce que** ladite architecture traite des longueurs différentes des intervalles de temps aussi que des taux différents de symboles dans une super-trame.

8. Procédé selon l'une quelconque des revendications précédentes, **caractérisé en ce que** le procès d'attribution de ressources (RA; Resource Allocation) est divisé en "tours d'attribution" et que la durée d'un tour d'attribution est identique à la durée d'une super-trame.

9. Procédé selon la revendication 8, **caractérisé en ce qu'**au commencement d'un tour d'attribution, un dispositif d'attribution de ressources examine un tableau de requêtes de ressources (RRT; Resource Request Table) pour des requêtes RBDC expirées ou pour des requêtes VBDC déjà attribuées, que des entrées expirées sont ensuite éliminées du tableau, la différentiation entre requêtes RBDC et requêtes VBDC étant faite pour préférer les requêtes RBDC, généralement soumises à des conditions préalables strictes par rapport au retard et au scintillement du retard, aux requêtes VBDC lors du traîtement effectué plus tard, et qu'au commencement d'un tour d'attribution toutes les requêtes listées dans ledit tableau de requêtes de ressources sont traitées.

10. Procédé selon l'une quelconque des revendications précédentes, **caractérisé en ce qu'**avec une structure fixe de temps et de fréquence, dans le scénario dynamique, les ModCods sont attribués individuellement à une intervalle de temps suivant l'horaire de rafales des terminaux (TBTP, Terminal Burst Time Plan) qui est transmit séparément pour chaque super-trame.

11. Procédé selon la revendication 10, **caractérisé en ce que** le nombre de symboles nécessité par une certaine requête est calculé, cette quantité étant fonction des conditions du canal actuelles.

12. Procédé selon la revendication 11, **caractérisé en ce que,** après des ModCods sont appelés et les symboles nécessaires par requêtes sont calculés, le mécanisme de l'algorithme d'attribution de ressources (RAA; Resource Allocation Algorithm) fait une première vérification pour déterminer s'il y a une possibilité de servir toutes les requêtes.

13. Procédé selon la revendication 12, **caractérisé en ce que,** pour l'établissement actuel de la super-trame, l'algorithme d'attribution de ressources rassemble toutes les requêtes-par-opération sur un niveau-par-terminal pour être capable de chercher pour des attributions des intervalles de temps parallèles qui sont inadmissibles.

14. Procédé selon les revendications 12 et 13, **caractérisé en ce que,** pour réduire la complexité totale de calcul de l'algorithme d'attribution, on fait ensuite une première estimation d'une possible adaptation de capacité pour arriver à une attribution de ressources directe, car la charge de calcul est diminuée parce que dans des situations, dans lesquelles toutes les requêtes peuvent être servies, l'application d'un algorithme de résolution de conflits est nécessaire qui ne produirait que le même résultat.

15. Procédé selon la revendication 1, **caractérisé en ce que** la procédure est catégorisée en trois cas, à savoir:
a) toutes les requêtes peuvent être servies,
b) non pas toutes les requêtes peuvent être servies, mais toutes les requêtes RBDC peuvent être servies;
c) non pas toutes les requêtes peuvent être servies, les requêtes RBDC ne peuvent être servies non plus.

16. Procédé selon la revendication 15, **caractérisé en ce qu'**il est vrai pour le cas a) (toutes les requêtes peuvent être servies):
que la quantité de symboles requiert par un terminal est calculée et mappée dans un nombre des intervalles de temps nécessaire, que, lorsque le nombre total des intervalles de temps est inférieur au nombre des intervalles de temps disponibles dans la super-trame, l'attribution actuelle des intervalles de temps aux porteurs est effectuée au moyen d'un algorithme du type "Bin Packing" résultant en un petit nombre de terminaux par porteur et un surplus de capacité distribué d'une manière sensiblement égale.

17. Procédé selon la revendication 16, **caractérisé en ce qu'**après le "Bin Packing", il s'avère que toutes les requêtes peuvent être attribuées à une rafale de trafic, il est vérifié s'il y a encore quelques intervalles de temps des surplus de capacité disponibles.

18. Procédé selon la revendication 17, **caractérisé en ce que** s'il y a encore des rafales de trafic non-utilisées, ces rafales sont attribuées comme surplus de capacité afin de compenser des variations de trafic inattendues.

19. Procédé selon la revendication 18, **caractérisé en ce que** des algorithmes possibles à utiliser pour la distribution des surplus de capacité comprend des algorithmes du type "Combined-free-Demand-Assignment" ou des algorithmes d'attribution de demande de prédiction.

20. Procédé selon la revendication 19, **caractérisé en ce qu'**il est vrai pour le cas b) (non pas toutes les requêtes peuvent être servies, mais toutes les requêtes RBDC peuvent être servies):
que, si la première estimation de charge indique que la super-trame n'a pas assez de capacité pour servir toutes les requêtes, un deuxième calcul de la capacité nécessaire pour toutes les requêtes RBDC est effectué, cette priorité étant donnée parce qu'il est bien plus important de respecter les critères de gestion du temps et de débit pour les opération RBDC que pour les opérations basées sur la quantité, que, si l'estimation de charge indique qu'il pourrait être possible d'attribuer suffisamment de capacité pour servir toutes les requêtes RBDC, le "Bin Packing" est utilisé encore une fois pour vérifier si la capacité dans une super-trame peut vraiment être attribuée, et que, si c'est possible, les intervalles de temps en surplus sont distribuées parmi toutes les requêtes VBDC.

21. Procédé selon la revendication 20, **caractérisé en ce que,** car ce procès d'attribution ne traite plus la distribution du surplus de capacité, un algorithme de résolution de conflits est utilisé pour obtenir l'attribution optimale.

22. Procédé selon la revendication 21, **caractérisé en ce que** l'algorithme de résolution de conflits est un algorithme d'attribution du type "Weighted Proportional", selon lequel des requêtes sont attribuées parmi toutes les requêtes proportionnellement, par rapport à la capacité, à la magnitude des requêtes.

23. Procédé selon la revendication 21, **caractérisé en ce que** l'on utilise comme algorithme de résolution de conflits un algorithme d'attribution du type "Proportional Fair" tout en prenant en compte l'état de canal.

24. Procédé selon l'une quelconque des revendications 20 à 23, **caractérisé en ce que,** si un surplus de capacité est disponible, ce surplus est distribué parmi les terminaux actifs, mais seulement dans le même porteur, afin d'empêcher des sauts de porteur.

25. Procédé selon les revendications 15 et 20, **caractérisé en ce qu'**il est vrai pour le cas c) (non pas toutes les requêtes peuvent être servies, les requêtes RBDC ne peuvent être servies non plus):
que si l'algorithme du type "Bin Packing" ne réussit pas à attribuer des intervalles de temps dans la super-trame d'une manière que toutes requêtes RBDC peuvent être servies, le système face un conflit RBDC et que ce conflit est résolu par l'utilisation d'un algorithme de résolution de conflits, et qu'après le conflit RBDC est résolu, l'algorithme du type "Bin Packing" est appliqué encore une fois afin d'établir une vraie super-trame.

26. Procédé selon la revendication 25, **caractérisé en ce que** l'on utilise comme algorithme de résolution de conflits un algorithme du type "Weighted Proportional" ou un algorithme du type "Proportional Fair".

27. Procédé selon la revendication 25 ou 26, **caractérisé en ce que** si l'on utilise un algorithme de résolution de conflits et l'algorithme du type "Bin Packing" ne peut pas attribuer des intervalles de temps à toutes les requêtes, la capacité maximale disponible est attribuée à une requête.

28. Utilisation du procédé pour l'attribution de ressources selon l'une quelconque des revendications précédentes dans le domaine de la communication mobile en réseau radio par satellite.
